# EUROPEAN PATENT APPLICATION

(11) **EP 4 401 022 A1**
(43) Date of publication of application: **17.07.2024**
(21) Application number: 24151429.8
(22) Date of filing: 11.01.2024
(51) Int. Cl.: G06Q 10/087, G06Q 10/20

(54) **LAUNDRY TREATING APPLIANCE SYSTEM ARCHITECTURE AND METHOD OF OPERATING**

(30) Priority: 13.01.2023 US 202318096585
(71) Applicant: Whirlpool Corporation, Benton Harbor, MI 49022 (US)
(72) Inventor: Gayake, Sunit, Benton Harbor, MI 49022 (US); Nogaja, Natavarlal M., Benton Harbor, MI 49022 (US); Ravindren, Arunkumar, Benton Harbor, MI 49022 (US); Sepulveda, Marcelo, Benton Harbor, MI 49022 (US)
(74) Representative: PGA S.p.A., Milano, Succursale di Lugano

(57) **Abstract**

A laundry treating appliance system architecture and method of operating a laundry treating appliance or system architecture thereof, includes utilizing a removable memory unit (111) to enable or otherwise ensure self-diagnostic management of model number and/or serial number mismatches between laundry treating appliance components, as well as the exporting and/or importing a laundry treating appliance data values between similar laundry treating appliance model numbers or model types.

## Description

### BACKGROUND

Laundry treating appliances, such as washing machines, combination washer/dryers, refreshers, and non-aqueous systems, can have a configuration based on a rotating drum that at least partially defines a treating chamber in which laundry items are placed for treating. The laundry treating appliance can have a controller that implements a number of user-selectable, preprogrammed cycles of operation having one or more operating parameters. Hot water, cold water, or a mixture thereof, along with various treating chemistries, can be supplied to the treating chamber in accordance with the cycle of operation. In addition, hot air, cold air, or a mixture thereof can be supplied to the treating chamber in accordance with the cycle of operation and via an air flow assembly.

### BRIEF SUMMARY

In one aspect, the present disclosure relates to a system architecture for a laundry treating appliance, including a user interface having memory storing a first model number value and a first serial number value, an appliance control unit having memory storing a second model number value and a second serial number value, and the system architecture configured to perform a first determination of whether the first model number value and the first serial number value are valid, and configured to perform a second determination of whether the second model number value and the second serial number value are valid, and based on the first determination and the second determination, update at least one of the first model number value, the second model number value, the first serial number value, or the second serial number value that was determined to be invalid with a valid corresponding model number value or a valid corresponding serial number value.

In another aspect, the present disclosure relates to a method of exporting audit data for a laundry treating appliance, the method including reading, by a system architecture, a set of machine audit data values stored at the laundry treating appliance, determining, by the system architecture, whether a serial number of the laundry treating appliance is valid, and based on a determination that the serial number of the laundry treating appliance is valid, writing the set of machine audit data values to a removable memory unit, wherein the writing the set of machine audit data values includes a data file naming convention including at least a portion of the serial number of the laundry treating appliance.

In yet another aspect, the present disclosure relates to a method of operating a system architecture for a set of laundry treating appliances, the method including reading, by the system architecture, a model number value from one of the set of laundry treating appliances, determining, by the system architecture, whether a removable memory unit is connected with the system architecture of the one of the set of laundry treating appliances, and upon a determination that the removable memory unit is connected with the system architecture, exporting parameter data, by the system architecture, to the removable memory unit, wherein the exporting the parameter data of the one of the set of laundry treating appliances includes an export data file naming convention including at least a portion of the model number value of the one of the set of laundry treating appliances.

### BRIEF DESCRIPTION OF THE DRAWINGS

In the drawings:
FIG. 1 illustrates a schematic cross-sectional view of a laundry treating appliance in the form of a combination washing and drying machine having an air flow assembly according to an aspect of the present disclosure.
FIG. 2 illustrates a schematic of a control system of the laundry treating appliance of FIG. 1 according to an aspect of the present disclosure.
FIG. 3 illustrates a laundry system architecture applicable to a laundry treating appliance, such as the laundry treating appliance of FIG. 1.
FIG. 4 illustrates a method of updating a model number or a serial number of a laundry treating appliance, in accordance with the laundry system architecture of FIG. 3.
FIG. 5 illustrates a portion of a method of exporting audit data of a laundry treating appliance, in accordance with the laundry system architecture of FIG. 3.
FIG. 6 illustrates another portion of the method of exporting audit data of a laundry treating appliance of FIG. 5.
FIG. 7 illustrates a portion of a method of importing parameters of a laundry treating appliance, in accordance with the laundry system architecture of FIG. 3.
FIG. 8 illustrates a portion of a method of exporting parameters of a laundry treating appliance, in accordance with the laundry system architecture of FIG. 3.
FIG. 9 illustrates another portion of the method of exporting parameters of a laundry treating appliance of FIG. 8.

### DETAILED DESCRIPTION

Aspects of the disclosure relate to a system architecture or a laundry treating appliance system architecture, and a method of operating the system architecture or laundry treating appliance system architecture, for operably interacting with and importing or exporting data associated with the laundry treating appliance. Laundry treating appliances can be provided with structures and functionality both for washing and drying laundry items within a single appliance, or provided with structures and functionality for either washing or drying laundry items within a single appliance. In the case of such a combination washing and drying appliance, in addition to the components provided in a traditional washing machine, additional components for drying laundry items are also provided within the appliance. Non-limiting examples of such drying components include an air flow pathway, including an air inlet and an air outlet to the tub interior, a condenser, a blower, a heating element, and a manifold.

In some instances, multiple laundry treating appliances can be housed in, or installed at a single or common physical location, such as a commercial laundry treating facility or business. In non-limiting examples, the common physical location can include or house multiple laundry treating appliance units of similar or dissimilar models or functionality. One non-limiting example of a common physical location, as described herein, can include a "laundromat", or commercial business open to the public to perform washing or drying laundry operations, shopping area locations, academic locations such as schools, universities, dormitories, or the like, other housing units such as apartment buildings condominiums, or the like, or another physical location configured or adapted to allow for a user or customer to provide laundry treating services to the public or to private individuals.

During operation of the laundry treating appliances, service technicians or managers responsible for the operation of the machines can perform maintenance operations on the laundry treating appliances. Non-limiting examples of maintenance operations can include repair or service of machines to ensure or correct operational functionality of the laundry treating appliances, such as replacing broken or malfunctioning components, or the like. Another non-limiting example of maintenance operations can include updating control functionality of the laundry treating appliance, such as updating appliance parameters such as operational cycles of operation, timing of cycles of operation, sensing parameters for respective cycles of operation, or the like. In yet another non-limiting example of maintenance operations, service technicians or managers responsible for the operation of the machines can obtain data or reports related to current or past operation or operations of one or more of the laundry treating appliances or machines.

In traditional combination washing and drying machines, or traditional washing machine or traditional drying machine, information or data can be manually entered by way of a human machine interface (HMI). In this instance, a user or service technician physically present at the laundry treating machine can use a key pad, buttons, key presses, interactive devices (i.e., a knob, a slide, a switch, or the like) to interact with the HMI to operably input information or data, or to operably receive output information or data, to or from the laundry treating appliance or machine. This operation can be completed at each respective laundry treating machine to input or output data in a location. In physical location where data input or output is utilized by a user or service technician servicing many laundry treating machines, traditional input and output mechanisms can occupy a long period of time for the user to technician, as each laundry treating appliance is interacted with individually.

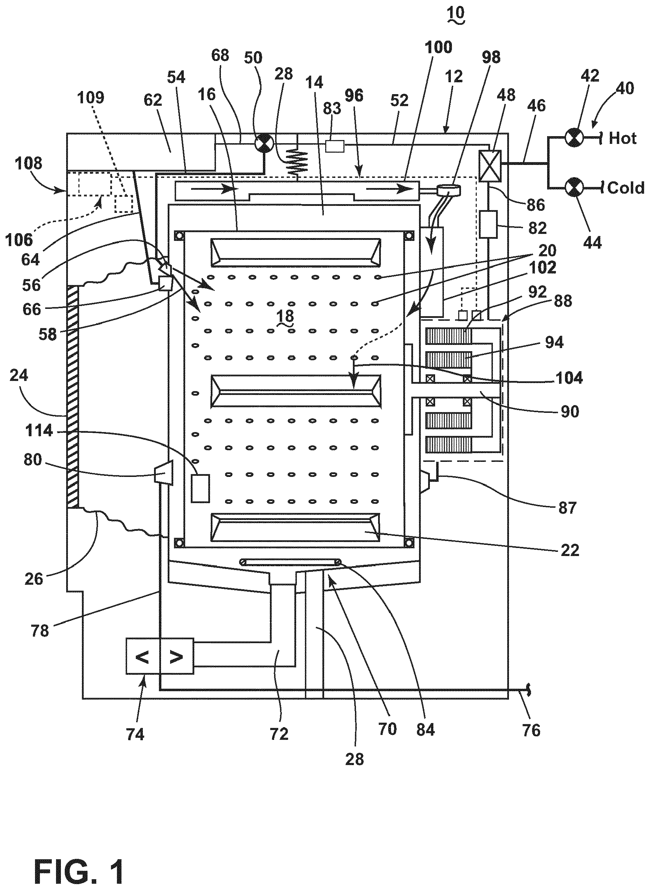

FIG. 1 is a schematic cross-sectional view of one non-limiting example laundry treating appliance capable of including aspects of the laundry treating appliance system architecture, according to an aspect of the present disclosure. As used herein, a "system architecture" can include a set of interactive components capable or configured to interact with each other forming a system or operably allowing for desired functionality of a laundry treating appliance. Non-limiting examples of interactive components can include processors, central processing units (CPUs), memory for storing data or program code, interfaces for interconnecting interactive components (including both direct or "wired" interfaces and indirect or wireless interfaces), the operation of program code or functionality based therewith, or the like. As used herein, the term "set" or a "set" of elements can be any number of elements, including only one.

The laundry treating appliance can be any appliance which performs an automatic cycle of operation to clean or otherwise treat items placed therein, non-limiting examples of which include a horizontal or vertical axis clothes washer; a combination washing machine and dryer; a tumbling or stationary refreshing/revitalizing machine; an extractor; a non-aqueous washing apparatus; and a revitalizing machine. While the laundry treating appliance is illustrated herein as a horizontal axis, front-load laundry treating appliance, the aspects of the present disclosure can have applicability in laundry treating appliances with other configurations.

Washing machines are typically categorized as either a vertical axis washing machine or a horizontal axis washing machine. The terms vertical axis and horizontal axis are often used as shorthand terms for the manner in which the appliance imparts mechanical energy to the load of laundry, even when the relevant rotational axis is not absolutely vertical or horizontal. As used herein, the "vertical axis" washing machine refers to a washing machine having a rotatable drum, perforate or imperforate, that holds fabric items and a clothes mover, such as an agitator, impeller, nutator, and the like within the drum. The clothes mover moves within the drum to impart mechanical energy directly to the clothes or indirectly through wash liquid in the drum. The clothes mover can typically be moved in a reciprocating rotational movement. In some vertical axis washing machines, the drum rotates about a vertical axis generally perpendicular to a surface that supports the washing machine. However, the rotational axis need not be vertical. The drum can rotate about an axis inclined relative to the vertical axis.

As used herein, the "horizontal axis" washing machine refers to a washing machine having a rotatable drum, perforated or imperforate, that holds laundry items and washes the laundry items. In some horizontal axis washing machines, the drum rotates about a horizontal axis generally parallel to a surface that supports the washing machine. However, the rotational axis need not be horizontal. The drum can rotate about an axis inclined or declined relative to the horizontal axis. In horizontal axis washing machines, the clothes are lifted by the rotating drum and then fall in response to gravity to form a tumbling action. Mechanical energy is imparted to the clothes by the tumbling action formed by the repeated lifting and dropping of the clothes. Vertical axis and horizontal axis machines are best differentiated by the manner in which they impart mechanical energy to the fabric articles.

Regardless of the axis of rotation, a washing machine can be top-loading or front-loading. In a top-loading washing machine, laundry items are placed into the drum through an access opening in the top of a cabinet, while in a front-loading washing machine laundry items are placed into the drum through an access opening in the front of a cabinet. If a washing machine is a top-loading horizontal axis washing machine or a front-loading vertical axis washing machine, an additional access opening is located on the drum.

The exemplary laundry treating appliance of FIG. 1 is illustrated as a horizontal axis combination washing and drying machine 10, which can include a structural support system comprising a cabinet 12 which defines a housing within which a laundry holding system resides. While illustrated as a combination washing and drying machine 10 it should be understood that aspects of the disclosure, including the laundry treating appliance system architecture, as described herein can be implemented in a stand-alone washing machine or a stand-alone dryer. The cabinet 12 can be a housing having a chassis and/or a frame, to which decorative panels can or cannot be mounted, defining an interior enclosing component typically found in a conventional washing machine, such as motors, pumps, fluid lines, controls, sensors, transducers, and the like. Such components will not be described further herein except as necessary for a complete understanding of the present disclosure.

The laundry holding system comprises a tub 14 dynamically suspended within the structural support system of the cabinet 12 by a suitable suspension system 28 and a drum 16 provided within the tub 14, the drum 16 defining at least a portion of a laundry treating chamber 18. The drum 16 is configured to receive a laundry load comprising articles for treatment, including, but not limited to, a hat, a scarf, a glove, a sweater, a blouse, a shirt, a pair of shorts, a dress, a sock, and a pair of pants, a shoe, an undergarment, and a jacket. The drum 16 can include a plurality of perforations 20 such that liquid can flow between the tub 14 and the drum 16 through the perforations 20. It is also within the scope of the present disclosure for the laundry holding system to comprise only one receptacle with the receptacle defining the laundry treating chamber for receiving the load to be treated. At least one lifter 22 can extend from a wall of the drum 16 to lift the laundry load received in the treating chamber 18 while the drum 16 rotates.

The laundry holding system can further include a door 24 which can be movably mounted to the cabinet 12 to selectively close both the tub 14 and the drum 16. A bellows 26 can couple an open face of the tub 14 with the cabinet 12, with the door 24 sealing against the bellows 26 when the door 24 closes the tub 14.

The combination washing and drying machine 10 can further comprise a washing circuit which can include a liquid supply system for supplying water to the combination washing and drying machine 10 for use in treating laundry during a cycle of operation. The liquid supply system can include a source of water, such as a water supply 40, which can include separate valves 42 and 44 for controlling the flow of hot and cold water, respectively. Water can be supplied through an inlet conduit 46 directly to the tub 14 or the drum 16 by controlling first and second diverter mechanisms 48 and 50, respectively. The diverter mechanisms 48, 50 can be a diverter valve having two outlets such that the diverter mechanisms 48, 50 can selectively direct a flow of liquid to one or both of two flow paths. Water from the household water supply 40 can flow through the inlet conduit 46 to the first diverter mechanism 48 which can direct the flow of liquid to a supply conduit 52. The second diverter mechanism 50 on the supply conduit 52 can direct the flow of liquid to a tub outlet conduit 54 which can be provided with a spray nozzle 56 configured to spray the flow of liquid 58 into the tub 14. In this manner, water from the household water supply 40 can be supplied directly to the tub 14. While the valves 42, 44 and the conduit 46 are illustrated exteriorly of the cabinet 12, it will be understood that these components can be internal to the cabinet 12.

The combination washing and drying machine 10 can also be provided with a dispensing system for dispensing treating chemistry to the treating chamber 18 for use in treating the load of laundry according to a cycle of operation. The dispensing system can include a treating chemistry dispenser 62 which can be a single dose dispenser, a bulk dispenser, or an integrated single dose and bulk dispenser and is fluidly coupled to the treating chamber 18. The treating chemistry dispenser 62 can be configured to dispense a treating chemistry directly to the tub 14 or mixed with water from the liquid supply system through a dispensing outlet conduit 64. The dispensing outlet conduit 64 can include a dispensing nozzle 66 configured to dispense the treating chemistry into the tub 14 in a desired pattern and under a desired amount of pressure. For example, the dispensing nozzle 66 can be configured to dispense a flow or stream of treating chemistry into the tub 14 by gravity, i.e., a non-pressurized stream. Water can be supplied to the treating chemistry dispenser 62 from the supply conduit 52 by directing the diverter mechanism 50 to direct the flow of water to a dispensing supply conduit 68.

The treating chemistry dispenser 62 can include multiple chambers or reservoirs for receiving doses of different treating chemistries. The treating chemistry dispenser 62 can be implemented as a dispensing drawer that is slidably received within the cabinet 12, or within a separate dispenser housing which can be provided in the cabinet 12. The treating chemistry dispenser 62 can be moveable between a fill position, where the treating chemistry dispenser 62 is exterior to the cabinet 12 and can be filled with treating chemistry, and a dispense position, where the treating chemistry dispenser 62 are interior of the cabinet 12.

Non-limiting examples of treating chemistries that can be dispensed by the dispensing system during a cycle of operation include one or more of the following: water, enzymes, fragrances, stiffness/sizing agents, wrinkle releasers/reducers, softeners, antistatic or electrostatic agents, stain repellants, water repellants, energy reduction/extraction aids, antibacterial agents, medicinal agents, vitamins, moisturizers, shrinkage inhibitors, and color fidelity agents, and combinations thereof.

The combination washing and drying machine 10 can also include a recirculation and drain system for recirculating liquid within the laundry holding system and draining liquid from the combination washing and drying machine 10. Liquid supplied to the tub 14 through tub outlet conduit 54 and/or the dispensing supply conduit 68 typically enters a space between the tub 14 and the drum 16 and can flow by gravity to a sump 70 formed in part by a lower portion of the tub 14. The sump 70 can also be formed by a sump conduit 72 that can fluidly couple the lower portion of the tub 14 to a pump 74. The pump 74 can direct liquid to a drain conduit 76, which can drain the liquid from the combination washing and drying machine 10, or to a recirculation conduit 78, which can terminate at a recirculation inlet 80. The recirculation inlet 80 can direct the liquid from the recirculation conduit 78 into the drum 16. The recirculation inlet 80 can introduce the liquid into the drum 16 in any suitable manner, such as by spraying, dripping, or providing a steady flow of liquid. In this manner, liquid provided to the tub 14, with or without treating chemistry can be recirculated into the treating chamber 18 for treating the load of laundry within.

The liquid supply and/or recirculation and drain system can be provided with a heating system which can include one or more devices for heating laundry and/or liquid supplied to the tub 14, such as a steam generator 82, an inline heater 83 and/or a sump heater 84. Liquid from the household water supply 40 can be provided to the steam generator 82 through the inlet conduit 46 by controlling the first diverter mechanism 48 to direct the flow of liquid to a steam supply conduit 86. Steam generated by the steam generator 82 can be supplied to the tub 14 through a steam outlet conduit 87. The steam generator 82 can be any suitable type of steam generator such as a flow through steam generator or a tank-type steam generator. Alternatively, the sump heater 84 can be used to generate steam in place of or in addition to the steam generator 82. In addition, or alternatively to generating steam, the steam generator 82 and/or sump heater 84 can be used to heat the laundry and/or liquid within the tub 14 as part of a cycle of operation.

It is noted that the illustrated suspension system, liquid supply system, recirculation and drain system, and dispensing system are shown for exemplary purposes only and are not limited to the systems shown in the drawings and described above. For example, the liquid supply, dispensing, and recirculation and pump systems can differ from the configuration shown in FIG. 1, such as by inclusion of other valves, conduits, treating chemistry dispensers, sensors, such as water level sensors and temperature sensors, and the like, to control the flow of liquid through the combination washing and drying machine 10 and for the introduction of more than one type of treating chemistry. For example, the liquid supply system can include a single valve for controlling the flow of water from the household water source. In another example, the recirculation and pump system can include two separate pumps for recirculation and draining, instead of the single pump as previously described.

The combination washing and drying machine 10 also includes a drive system for rotating the drum 16 within the tub 14. The drive system can include a motor 88, which can be directly coupled with the drum 16 through a drive shaft 90 to rotate the drum 16 about a rotational axis during a cycle of operation. The motor 88 can be a brushless permanent magnet (BPM) motor having a stator 92 and a rotor 94. Alternately, the motor 88 can be coupled to the drum 16 through a belt and a drive shaft to rotate the drum 16, as is known in the art. Other motors, such as an induction motor or a permanent split capacitor (PSC) motor, can also be used. The motor 88 can rotate the drum 16 at various speeds in either rotational direction.

The motor 88 can rotate the drum 16 at various speeds in opposite rotational directions. In particular, the motor 88 can rotate the drum 16 at tumbling speeds wherein the fabric items in the drum 16 rotate with the drum 16 from a lowest location of the drum 16 towards a highest location of the drum 16, but fall back to the lowest location of the drum 16 before reaching the highest location of the drum 16. The rotation of the fabric items with the drum 16 can be facilitated by the at least one lifter 22. Typically, the force applied to the fabric items at the tumbling speeds is less than about 1G. Alternatively, the motor 88 can rotate the drum 16 at spin speeds wherein the fabric items rotate with the drum 16 without falling. The spin speeds can also be referred to as satellizing speeds or sticking speeds. Typically, the force applied to the fabric items at the spin speeds is greater than or about equal to 1G. As used herein, "tumbling" of the drum 16 refers to rotating the drum at a tumble speed, "spinning" the drum 16 refers to rotating the drum 16 at a spin speed, and "rotating" of the drum 16 refers to rotating the drum 16 at any speed.

The combination washing and drying machine 10 can further include a drying system 96 that can be a closed loop or an open loop circuit. A closed loop system is illustrated where the drying system 96 can include an air recirculation conduit that is fluidly coupled to and recirculates air 104 through the treating chamber 18. The air recirculation conduit can include a blower 98, a condenser 100, and a heating element 102. The condenser 100 can be provided with a condenser drain conduit (not shown) that fluidly couples the condenser 100 with the pump 74 and the drain conduit 76. Condensed liquid collected within the condenser 100 can flow through the condenser drain conduit to the pump 74, where it can be provided to the recirculation and drain system. In an exemplary aspect, the drying system 96 can be provided adjacent an upper portion of the tub 14, though it will be understood that the drying system 96 need not be provided adjacent an upper portion of the tub 14, and can be provided at any suitable location adjacent the tub 14. It is further contemplated that an open loop circuit is implemented where air is heated, passes through the drum 16, and is exhausted out of the combination washing and drying machine 10, in which case a condenser 100 is not necessary.

The combination washing and drying machine 10 also includes a control system for controlling the operation of the combination washing and drying machine 10 to implement one or more cycles of operation. The control system can include at least one controller 106 located within the cabinet 12 and a user interface 108, such as the HMI, that is operably coupled with the controller 106. The user interface 108 can include one or more knobs, dials, switches, displays, touch screens and the like for communicating with the user, such as to receive input and provide output. The user can enter different types of information including, without limitation, cycle selection and cycle parameters, such as cycle options. In non-limiting examples, the user interface 108 can further include at least one controller (not shown). Non-limiting aspects of the combination washing and drying machine 10 can also include a removable memory interface (shown as dotted box 109). As use herein, a "removable memory interface" can include a communicative or interactive interface for communicating or interacting with memory or a memory that can be removably connected or disconnected with the laundry treating appliance.

The removable memory can include, but is not limited to, flash memory, or one or more different types of portable electronic memory, such as discs, DVDs, CD-ROMs, flash drives, memory cards, universal serial bus (USB) drives, the like, or any suitable combination of these types of memory. Non-limiting aspects of the removable memory interface 109 can be adapted to physically interact with, and provide for, allow for, or operably enable communication or data transmittal of information between the system architecture of the laundry treating appliance, the controller 106, the controller of the user interfaces 108, and the removable memory. Non-limiting examples of the removable memory interface 109 can include a universal serial bus port (USB port).

The controller 106 can include the machine controller and any additional controllers provided for controlling any of the components of the washing machine 10. For example, the controller 106 can include the machine controller and a motor controller, configured or operably adapted to control operation of the cycles of the washing and drying machine 10. In one non-limiting example, this controller 106 can be an appliance control unit (ACU). In another non-limiting example, the controller (not shown) of the user interface 108 can be configured or operably adapted to receive user or service technician input, display operational outputs (for example, by way of lights, display screens, text, audible outputs, vibration outputs, or the like). Additionally, non-limiting aspects of the disclosure can be included wherein the controller 117 of the user interface 108 can be communicatively or interactively connected with the controller 106.

Many known types of controllers can be used for the controller 106 or the controller 117 of the user interface 108. Additionally, as used herein, a "controller" or "controller module" can include a microprocessor-based component configured or adapted to provide instruction, control, operation, implements control software, software and sends/receives one or more electrical signals to/from each of the various working components to effect the control software, or any form of communication for operable components to effect the operation thereof. A controller module can include any known processor, microcontroller, or logic device, including, but not limited to: field programmable gate arrays (FPGA), an application specific integrated circuit (ASIC), a proportional controller (P), a proportional integral controller (PI), a proportional derivative controller (PD), a proportional integral derivative controller (PID controller), a hardware-accelerated logic controller (e.g. for encoding, decoding, transcoding, etc.), the like, or a combination thereof. Non-limiting examples of a controller module can be configured or adapted to run, operate, or otherwise execute program code to effect operational or functional outcomes, including carrying out various methods, functionality, processing tasks, calculations, comparisons, sensing or measuring of values, or the like, to enable or achieve the technical operations or operations described herein. The operation or functional outcomes can be based on one or more inputs, stored data values, sensed or measured values, true or false indications, or the like. While "program code" is described, non-limiting examples of operable or executable instruction sets can include routines, programs, objects, components, data structures, algorithms, etc., that have the technical effect of performing particular tasks or implement particular abstract data types. In another non-limiting example, a controller module can also include a data storage component accessible by the processor, including memory, whether transient, volatile or non-transient, or non-volatile memory.

Additional non-limiting examples of the memory can include Random Access Memory (RAM), Read-Only Memory (ROM), flash memory, or the like. In one example, the program code can be stored within the memory in a machine-readable format accessible by the processor. Additionally, the memory can store various data, data types, sensed or measured data values, inputs, generated or processed data, or the like, accessible by the processor in providing instruction, control, or operation to effect a functional or operable outcome, as described herein.

Non-limiting aspects of the system architecture for the laundry treating appliance can include system software utilized by, implemented by, or controllably operating the interactions of the one or more controllers 106, user interface 108 controllers, or the like, to operably affect operation of the laundry treating appliances, or interactions therewith. In this sense, non-limiting aspects of the system architecture can be based at or with the controller 106, the user interface 108 controller, another operable portion or component of the laundry treating appliance, or a combination thereof.

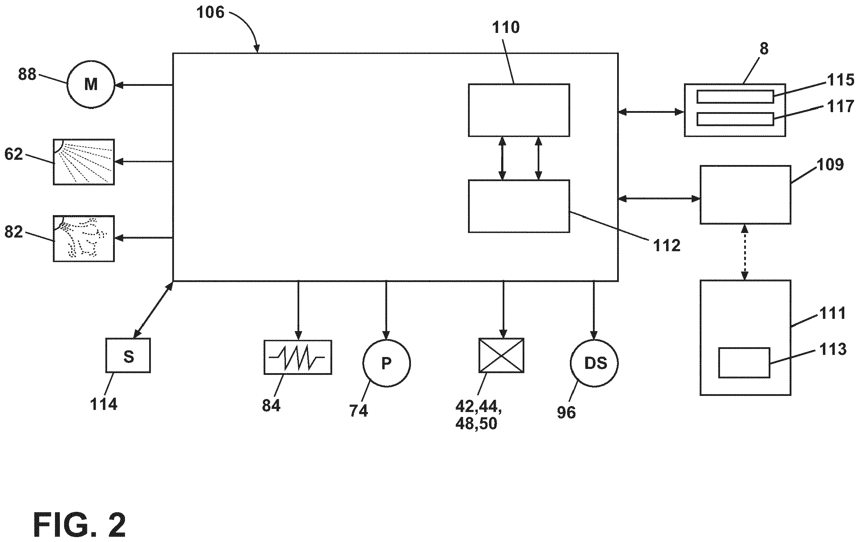

As schematically illustrated in FIG. 2, the controller 106 can be provided with a memory 110 and a central processing unit (CPU) 112, such as a controller module. The memory 110 can be used for storing the control software that is executed by the CPU 112 in completing a cycle of operation using the combination washing and drying machine 10 and any additional software. Examples, without limitation, of cycles of operation include: wash, heavy duty wash, delicate wash, quick wash, pre-wash, refresh, rinse only, and timed wash. The memory 110 can also be used to store information, such as a database or table, and to store data received from one or more components of the combination washing and drying machine 10 that can be communicably coupled with the controller 106. The database or table can be used to store the various operating parameters for the one or more cycles of operation, including factory default values for the operating parameters and any adjustments to them by the control system or by user input. Additionally, non-limiting aspects of the memory can include or be utilized for storing data related to the operation of the laundry treating appliance, including but not limited to, historical usage information, historical counts or data related to the operated cycle of operations, cycle of operation parameters, pricing data (for example, at a commercial facility where individual cycles of operation incur a charge or cost to operate), or the like.

The controller 106 can be operably coupled with one or more components of the combination washing and drying machine 10 for communicating with and controlling the operation of the component to complete a cycle of operation. For example, the controller 106 can be operably coupled with the motor 88, the pump 74, the treating chemistry dispenser 62, the steam generator 82, the sump heater 84, and the drying system 96 to control the operation of these and other components to implement one or more of the cycles of operation.

The controller 106 can also be coupled with one or more sensors 114 provided in one or more of the systems of the washing machine 10 to receive input from the sensors, which are known in the art and illustrated in FIG. 1 in a lower portion of the treating chamber 18 for exemplary purposes only. Non-limiting examples of sensors 114 that can be communicably coupled with the controller 106 include: a treating chamber temperature sensor, a moisture sensor, a weight sensor, a chemical sensor, a position sensor and a motor torque sensor, which can be used to determine a variety of system and laundry characteristics, such as laundry load inertia or mass.

The controller 106 is further shown coupled with the user interface 108, which further comprises, for example, memory 115 and a controller 117 or central processing unit (CPU), such as a controller module. Similar to the memory 110 of the controller 106, the memory 115 can be used for storing the control software that is executed by the CPU 112 in operating the user interface 108 and any additional software.

Also as shown, the controller 106 can be communicatively coupled with the removable memory interface 109, which is further optionally illustrated coupled with a removable memory unit 111 having memory 113 which can be used for storing any of the information or data described herein. In this sense, the removable memory unit 111 can be physically received at the removable memory interface 109, and by way of the removable memory interface 109, transfer, transmit, receive, send, or otherwise communicate information or data between the memory 113 of the removable memory unit 111 and the controller 106, the user interface 108, memories 110, 115 thereof, or a combination thereof.

While a combination washing and drying machine 10 is illustrated and described in FIGS. 1-2, non-limiting aspects of the disclosure can be included in any laundry treating appliance, including a washing machine, a drying machine, a dry cleaning machine, or the like. The combination washing and drying machine 10 is merely provided as one non-limiting example of a laundry treating appliance capable or configured to incorporate aspects of the laundry treating appliance system architecture, described herein.

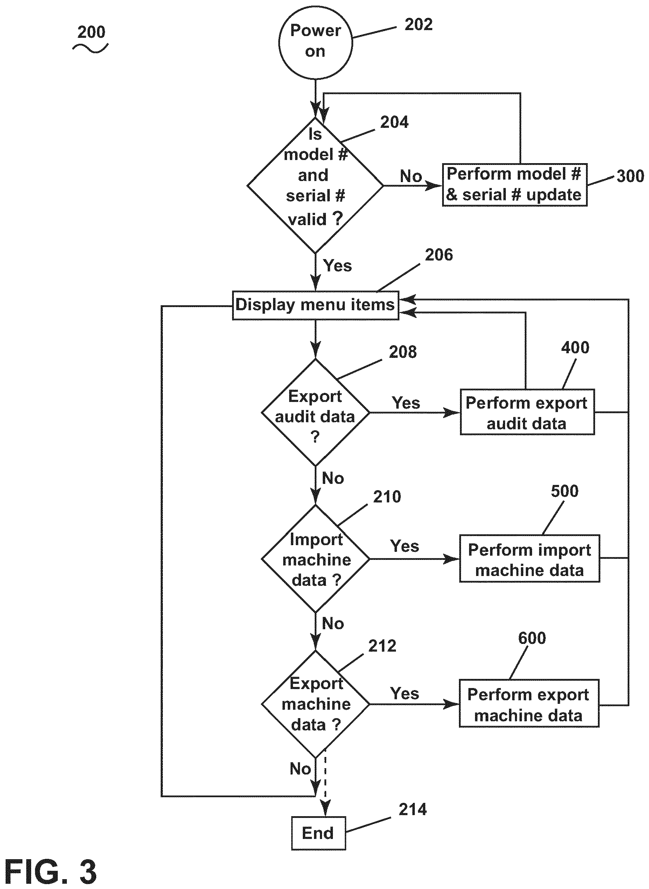

Turning now to FIG. 3, FIG. 3 illustrates a schematic flow chart of operation of the laundry treating appliance system architecture 200. Non-limiting aspects of the system architecture 200 can be operably implemented by way of the controller 106, the controller 117 of the user interface 108, additional system components, and can further include interactive components adapted or configured for user or service technician interaction, such as the user interface 108 or a remotely located (i.e., remote from the laundry treating appliance, or located on a separate device) user interface. Interaction can be conveyed by way of knobs, dials, switches, displays, touch screens and the like for communicating with the user, such as to receive input and provide output or messaging to the user.

Non-limiting aspects of the system architecture 200 can optionally begin at 202, such as during a power-on, start up, or boot sequence for the laundry treating appliance, the system architecture 200, the appliance software, or the like. Alternatively, non-limiting aspects of the system architecture 200 can optionally begin at another time, such as by way of accessing a settings menu of the user interface 108, or communicating with the laundry treating appliance to place the appliance in a specialized service mode.

In one non-limiting example, the first operation of the system architecture 200 after beginning can include a process to operably validate, confirm, check, or otherwise ensure that a model number, a serial number, or both a model number and a serial number of the particular laundry treating appliance are valid. For example, at 204 the system architecture 200 can perform a preliminary decision on whether the model number and the serial number of the laundry treating appliance is valid.

As used herein, a "validation", a "confirmation", a "checking", otherwise "ensuring", or related terminology (e.g., "valid", "validate", "confirm", etc.) a particularly described decision a can include comparing a first value with a second value, and operating or controlling operations of software or the system architecture 200 based on the satisfying of that comparison. For example, when a sensed, measured, read data value, or provided value is compared with another value or data, including a stored or predetermined value or data, the satisfaction of that comparison can result in actions, functions, or operations controllable by the controller 106, the controller 117 of the user interface 108, or control by way of the system architecture 200. As used, the term "satisfies" or "satisfaction" of the comparison is used herein to mean that the first value or data satisfies the second value or data, or satisfies one or more rules associated with the comparison, such as being equal to or less than the second value, being within the value range of the second value, or being within guidelines of data or data formatting expectations. While decision trees shown are illustrated as "yes" and "no" branches, it will be understood that such a determination may easily be altered to be satisfied by a positive/negative comparison or a true/false comparison.

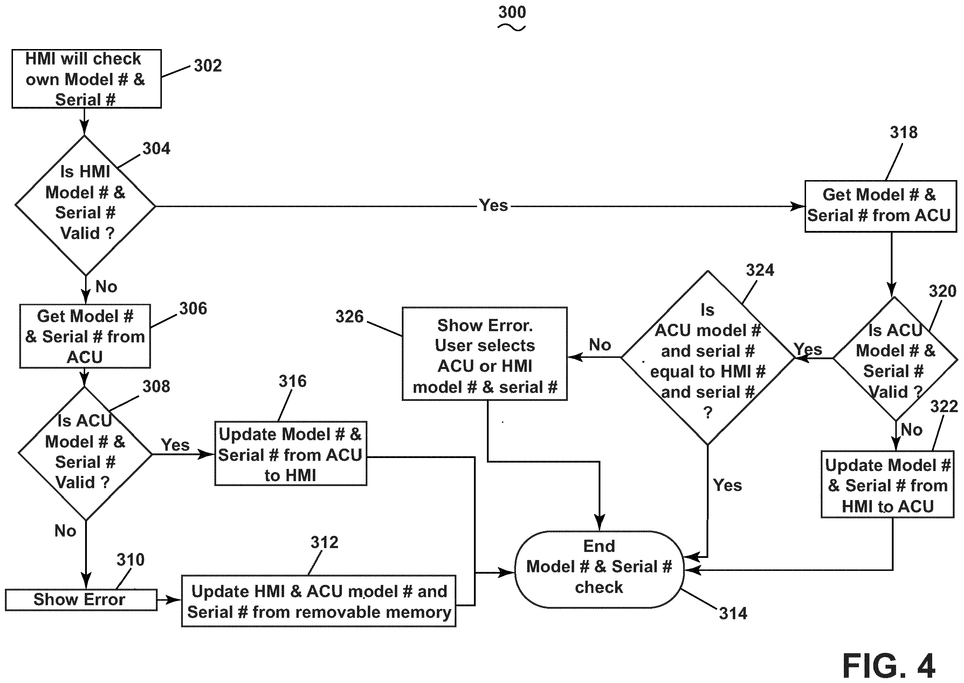

At 204, the system architecture 200 can read at least one of the model number or the serial number from at least one of the user interface 108 or the controller 106, and can validate whether the model number and the serial number are currently valid. This process will be expanded on with reference to FIG. 4. In non-limiting examples, 204 can operably perform this validation at every startup of the laundry treating appliance. Alternatively, or in addition, 204 can be operably bypassed in response to an indication to bypass 204, such as by registering a particular keypress or user input.

If the result of 204 indicates at least one of the model number or serial number is invalid (e.g., the determination is at least one of the model number or serial number is not valid), the system architecture 200 can then proceed to operate or perform another process, such as a model number or serial number update process 300. Upon completion of the model number or serial number update process 300, the system architecture 200 can return to 204 to perform a preliminary decision on whether the model number and the serial number of the laundry treating appliance is valid to ensure the model number or serial number update process 300 completed successfully.

If the result of 204 indicates the model number and serial number are valid, the system architecture 200 can proceed to another instance or step. For example, in the instance where 204 was a preliminary decision, the system architecture 200 can move to optionally display further options to a user or service technician at 206. In one non-limiting example, the optional display of further options can be enabled by a menu on the user interface 108, display screen, text display, or the like. Furthermore, in another non-limiting example, the optional display of further options can be selectable by way of the user interface 108, or can, for example, scroll through multiple menu items to be selectable by a user or service technician based on the currently displayed menu item.

In one instance, one of the process options selectable by the user or service technician can include exporting audit data for the particular laundry treating appliance or machine. If the user or service technician selects to export audit data at 208, the system architecture 200 can proceed to perform the export audit data process 400. Upon completion of the export audit data process 400, the system architecture can return to the menu 206, or can optionally end the method of process at 214.

In another instance, one of the process options selectable by the user or service technician can include importing machine data for the particular laundry treating appliance or machine. If the user or service technician selects to import machine data at 210, the system architecture 200 can proceed to perform the import of machine data process 500. Upon completion of the import of machine data process 500, the system architecture can return to the menu 206, or can optionally end the method of process at 214.

In yet another instance, one of the process options selectable by the user or service technician can include exporting machine data for the particular laundry treating appliance or machine. If the user or service technician selects to export machine data at 212, the system architecture 200 can proceed to perform the export of machine data process 600. Upon completion of the export of machine data process 600, the system architecture can return to the menu 206, or can optionally end the method of process at 214.

While aspects of FIG. 3 illustrate one non-limiting option of cycling through the menu items (e.g. not exporting audit data 208 proceeds to import machine data 210; not importing machine data 210 proceeds to export machine data 212; not exporting machine data 212 can end the process or method 214 or return to cycle through the displayed menu items 206 again), additional optional paths or configurations can be included in the system architecture 200, and the illustrated example is merely just one option.

FIG. 4 illustrates a schematic example method or process of model number or serial number updating 300. The process of model number or serial number updating 300 begins at 302, wherein the HMI, such as the user interface 108, or the controller thereof, reads, checks, or otherwise returns the data values indicating the model number and serial number stored on or at the user interface 108. At 304, the system architecture 200 will validate whether the model number and serial number stored on or at the user interface 108 and received at 302 are valid.

Non-limiting aspects of the disclosure can be included wherein the validation of the model number or serial number at 304 is confirmed by ensuring or comparing the received model number and serial number matches existing naming conventions, or other model number and serial number naming conventions. For example, in one instance, a valid model number can comprise 12 bytes of data, which comprise a known model number naming convention or conventions, such as alphanumeric naming conventions ensuring numbers or letters are located in known ordering or positioning. In another instance, a valid serial number can comprise 12 bytes of data, which comprise a known serial number naming convention or conventions, such as alphanumeric naming conventions ensuring numbers or letters are located in known ordering or positioning. In an instance where either the model number or serial number stored on or at the user interface 108 is not valid, does not match a known naming convention, or returns a blank or null value for either the model number or serial number, the system architecture 200 can proceed to 306 of the model number or serial number updating process 300.

At 306, the system architecture 200 will read, check, or otherwise return the data values indicating the model number and serial number stored on or at the ACU, such as the controller 106. At 308, the system architecture 200 will validate whether the model number and serial number stored on or at the controller 106 and received at 306 are valid. Operationally, the system architecture 200 can perform the validation of the model number or serial number at 308, as previously explained. In an instance where either the model number or serial number stored on or at the controller 106 is not valid, does not match a known naming convention, or returns a blank or null value for either the model number or serial number, the system architecture 200 can proceed to 310 of the model number or serial number updating process 300.

At 310, the system architecture can optionally display an error message to the user or service technician, indicating that the model number stored by the controller 117 of the user interface 108, the serial number stored by the controller 117 of the user interface 108, the model number stored by the controller 106, the serial number stored by the controller 106, or a combination thereof (for example, based on the validations at 304, at 308, or at a combination of 304 and 308), are invalid. In this instance, neither the controller 106 nor the controller 117 of the user interface 108 would indicate a valid model number and serial number combination. The system architecture 200 can then proceed to 312.

At 312, the user or service technician can operably select or choose to update both the controller 106 and the controller 117 of the user interface 108 with a new or different model number and serial number. In this sense, a user or service technician can overwrite, program, or reprogram the controller components to receive a new and valid model number and serial number combination. In one non-limiting example, the overwriting, programming, or reprogramming of the model number and serial number stored on both the controller 106 and the controller 117 of the user interface 108 can include using a known or predetermined model number and serial number stored in memory 113 of the removable memory unit 111 and received at the removable memory interface 109. Non-limiting aspects of the disclosure can ensure that the removable memory unit 111 is received at the removable memory interface 109, and that the memory 113 contains a valid model number and serial number. Once the controller 106 and the controller 117 of the user interface 108 have completed updating their respectively stored model number and serial number, the system architecture 200 can proceed to end the model number and serial number update process at 314.

In an instance where the model number and serial number stored on or at the controller 106 is valid, the system architecture 200 can proceed to 316 of the model number or serial number updating process 300. At 316, the system architecture 200 can operably update the valid model number and serial number of the controller 106 to overwrite, program, or reprogram the invalid model number or serial number of the controller 117. In this sense, the controller 117 having an invalid model number or serial number can be updated to known valid model number and serial number. Upon updating of the controller 117, the system architecture 200 can proceed to end the model number and serial number update process at 314.

In an instance where the model number and serial number stored on or at the controller 117 is valid, the system architecture 200 can proceed to 318 of the model number or serial number updating process 300. At 318, the system architecture 200 will read, check, or otherwise return the data values indicating the model number and serial number stored on or at the controller 106. At 320, the system architecture 200 will validate whether the model number and serial number stored on or at the controller 106 and received at 320 are valid. Operationally, the system architecture 200 can perform the validation of the model number or serial number at 320, as previously explained. In an instance where either the model number or serial number stored on or at the controller 106 is not valid, does not match a known naming convention, or returns a blank or null value for either the model number or serial number, the system architecture 200 can proceed to 322 of the model number or serial number updating process 300.

In an instance where the model number and serial number stored on or at the controller 117 is valid, while the model number or serial number stored on the controller 106 is invalid, the system architecture 200 can proceed at 322 to operably update the valid model number and serial number of the controller 117 to overwrite, program, or reprogram the invalid model number or serial number of the controller 106. In this sense, the controller 106 having an invalid model number or serial number can be updated to known valid model number and serial number. Upon updating of the controller 106, the system architecture 200 can proceed to end the model number and serial number update process at 314.

In an instance where the model number and serial number stored on or at the controller 117 is valid, and the model number or serial number stored on the controller 106 is also valid, the system architecture 200 can proceed at 324. At 324, the system architecture can determine if both the model number and serial number stored at the controller 117 are equal to, or the same as the model number and serial number stored at the controller 106. If the controller 117 and controller 106 do not have equal, same, or matching respective model numbers or serial numbers, the system architecture can proceed to 326.

At 326, the system architecture 200 can display an error message indicating the valid model numbers or serial numbers between controllers 106, 117 do not match or are not the same. The user or service technician, in response to the error message at 326 can operably select which of the controllers 106, 117 to use overwrite the other of the controllers 106, 117 with valid model numbers and serial numbers. For example, if a user selects to utilize the controller's 106 model number and serial number, the system architecture 200 can proceed to operably update the valid model number and serial number of the controller 106 to overwrite, program, or reprogram the valid model number or serial number of the controller 117. In another example, if a user selects to utilize the controller's 117 model number and serial number, the system architecture 200 can proceed to operably update the valid model number and serial number of the controller 117 to overwrite, program, or reprogram the valid model number or serial number of the controller 106. In this sense, one of the controllers 106, 117 can be updated with the model number and serial number of the other controller 106, 117, so both controllers 106, 117 can then comprise known valid matching model numbers and serial numbers. Upon updating of the controller 106, 117, the system architecture 200 can proceed to end the model number and serial number update process at 314.

In an instance where the system architecture determines both the model number and serial number stored at the controller 117 are equal to, or the same as the model number and serial number stored at the controller 106 at 324, the system architecture 200 can proceed to end the model number and serial number update process at 314.

During maintenance operations, it is understood that one of the user interface 108 or the controller 106 (such as a controller board or replaceable component) can be serviced, repaired, replaced, or the like. In this instances, a serviced, repaired, or replaced controller 106, 117 can comprise a new, different, or undefined model number or serial number, compared with the existing (e.g., non-serviced, non-repaired, or non-replaced) controller 106, 117. In other example instances, both the controllers 106, 117 can be serviced, repaired, or replaced simultaneously. Aspects of the disclosure allow for or enable a system architecture 200 configured or adapted to ensure the model number and serial number of each respective controller 106, 117, by using a valid model number and serial number of one controller 106, 117 to overwrite an invalid model number or serial number of the other controller 106, 117, by choosing a valid model number and serial number of one controller 106, 117 to overwrite a valid (but not matching) model number or serial number of the other controller 106, 117, or by using the removable memory unit 111 or removable memory interface 109 to overwrite the model number and serial number of both controllers 106, 117. Ensuring matching and valid model numbers and matching and valid serial numbers between controllers 106, 117 ensure proper controller 106, 117 synchronization for communication.

In traditional laundry treating appliances, replacing both controllers 106, 117 may not be possible at laundry treating appliance that have limited input options, where a user or service technician does not have enough user inputs at the user interface 108 to support entering alphanumeric model number and serial number combinations. By utilizing the removable memory unit 111 or removable memory interface 109, a user or service technician can update both controllers 106, 117 in the field or on site, without the limit on user interface 108 inputs. This would further aid users or service technicians rendering service to laundry treating appliances that lack display outputs (limiting available messaging or display options). Furthermore, with valid and matching model numbers and serial numbers between controllers 106, 117, the laundry treating appliance can be configured to connect to internet or cloud-based services, which typically are matched with the particular laundry treating appliance by the model number and serial number.

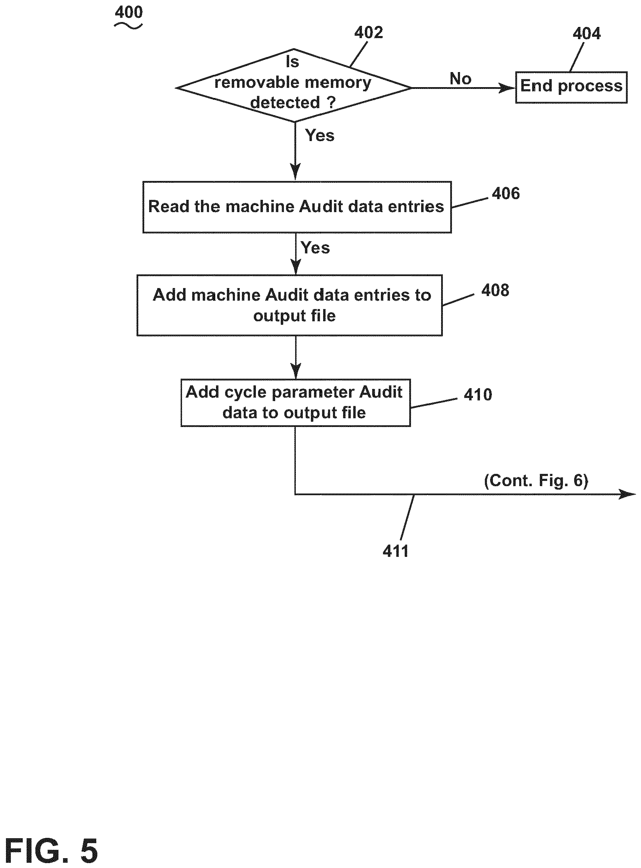

FIG. 5 illustrates a schematic example method or process performing an export of audit data 400. The process of performing an export of audit data 400 begins at 402, wherein the system architecture 200 determines whether removable memory is detected at the laundry treating appliance. For example, the system architecture 200, or a controller 106, 117 thereof, can determine whether a removable memory unit 111 is received at, present at, or connected with the removable memory interface 109. If the removable memory unit 111 is not received at, not present at, or not connected with the removable memory interface 109, or otherwise not detected or not detectable by the system architecture 200 (e.g., memory corruption or USB drive failure, for example), the system architecture 200 proceeds to end the process of performing an export of audit data 400 at 404.

If the removable memory unit 111 is received at, present at, or connected with the removable memory interface 109, or detected or detectable by the system architecture 200, the system architecture 200 proceeds to 406, at which time the system architecture 200 gets or reads the set of audit data and the corresponding set of audit data values stored at the laundry treating appliance. In non-limiting examples, the set of audit data and the corresponding set of audit data values can be stored by the system architecture 200, or stored at a controller 106, 117 or memory 110, 115 thereof.

One non-limiting example of audit data or audit data value, from the respective set of audit data and the set of audit data value can include data related to a cumulative cool water temperature upgrade. Another non-limiting example of audit data or audit data value, from the respective set of audit data and the set of audit data value can include data related to a cumulative warm water temperature upgrade top load (TL) regular dryer topoff escrow dryer (DR). Yet another non-limiting example of audit data or audit data value, from the respective set of audit data and the set of audit data value can include data related to a cumulative hot water temperature upgrade (TL) regular dryer topoff escrow penny offset (DR). Yet another non-limiting example of audit data or audit data value, from the respective set of audit data and the set of audit data value can include data related to a cumulative heavy soil level upgrade (TL) special dryer toff escrow (DR).

Yet another non-limiting example of audit data or audit data value, from the respective set of audit data and the set of audit data value can include data related to accumulative extra rinse upgrades (TL) special dryer topoff escrow penny offset (DR). Yet another non-limiting example of audit data or audit data value, from the respective set of audit data and the set of audit data value can include data related to a cumulative service cycles. Yet another non-limiting example of audit data or audit data value, from the respective set of audit data and the set of audit data value can include data related to a cumulative motor run time. Yet another non-limiting example of audit data or audit data value, from the respective set of audit data and the set of audit data value can include data related to a cumulative money coin (TL). Yet another non-limiting example of audit data or audit data value, from the respective set of audit data and the set of audit data value can include data related to a cumulative money card.

Yet another non-limiting example of audit data or audit data value, from the respective set of audit data and the set of audit data value can include data related to a cumulative monitor/collect reads (TL) cumulative probe reads (DR). Yet another non-limiting example of audit data or audit data value, from the respective set of audit data and the set of audit data value can include data related to an interval regular priced cycles. Yet another non-limiting example of audit data or audit data value, from the respective set of audit data and the set of audit data value can include data related to an interval special priced cycles. Yet another non-limiting example of audit data or audit data value, from the respective set of audit data and the set of audit data value can include data related to an interval service cycles. Yet another non-limiting example of audit data or audit data value, from the respective set of audit data and the set of audit data value can include data related to an interval trouble cycles.

Yet another non-limiting example of audit data or audit data value, from the respective set of audit data and the set of audit data value can include data related to an interval power downs. Yet another non-limiting example of audit data or audit data value, from the respective set of audit data and the set of audit data value can include data related to an interval unauthorized service accesses (TL) interval unauthorized service door openings (DR). Yet another non-limiting example of audit data or audit data value, from the respective set of audit data and the set of audit data value can include data related to an interval authorized service accesses interval authorized service door openings (DR). Yet another non-limiting example of audit data or audit data value, from the respective set of audit data and the set of audit data value can include data related to an interval unauthorized coin box accesses (TL) interval unauthorized coin vault openings (DR). Yet another non-limiting example of audit data or audit data value, from the respective set of audit data and the set of audit data value can include data related to an interval authorized coin box accesses (TL) interval authorized coin vault openings (DR).

Yet another non-limiting example of audit data or audit data value, from the respective set of audit data and the set of audit data value can include data related to a time of last service access (TL) time of last service door opening (DR). Yet another non-limiting example of audit data or audit data value, from the respective set of audit data and the set of audit data value can include data related to a time of last power down. Yet another non-limiting example of audit data or audit data value, from the respective set of audit data and the set of audit data value can include data related to a time of last coin box access (TL) time of last coin vault opening (DR). Yet another non-limiting example of audit data or audit data value, from the respective set of audit data and the set of audit data value can include data related to a current escrow. Yet another non-limiting example of audit data or audit data value, from the respective set of audit data and the set of audit data value can include data related to a user interface 108 software major version. Yet another non-limiting example of audit data or audit data value, from the respective set of audit data and the set of audit data value can include data related to a ACU or controller 106 software major version.

Yet another non-limiting example of audit data or audit data value, from the respective set of audit data and the set of audit data value can include data related to one or more cycle regular prices. Yet another non-limiting example of audit data or audit data value, from the respective set of audit data and the set of audit data value can include data related to one or more cycle special prices. Yet another non-limiting example of audit data or audit data value, from the respective set of audit data and the set of audit data value can include data related to one or more soil levels associated with a specific cycle. Yet another non-limiting example of audit data or audit data value, from the respective set of audit data and the set of audit data value can include data related to one or more extra rinses associated with a specific cycle. Yet another non-limiting example of audit data or audit data value, from the respective set of audit data and the set of audit data value can include data related to one or more temperature levels associated with a specific cycle.

While the aforementioned list of possible audit data or audit data values is provided, the system architecture 200 can read or provide any subset of combination of aforementioned list.

In response to getting or reading the set of audit data and the corresponding set of audit data values stored at the laundry treating appliance at 406, the system architecture 200 can build an output file, such as by adding at least a subset of the aforementioned list to the output file, at 408. In non-limiting examples, the system architecture 200 can add null values read, the system architecture 200 can skip over null or zero value data, the system architecture 200 can replace null values read with another value (for example, a default value or a zero value), or the like, in order to build or form the output file. Optionally, the system architecture 200 can add cycle parameter data, previously described, to the same or a different output file in a separate operation at 410, or can add can the cycle parameter data at 408.

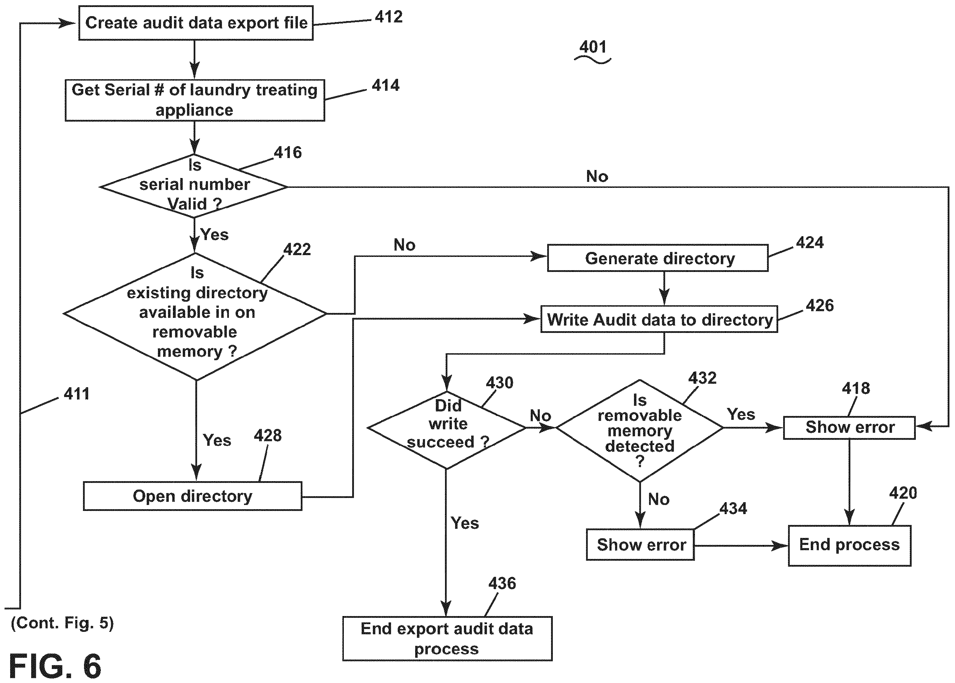

Regardless of optional 410, the system architecture 200 then proceeds, by way of cross-figure connection line 411, to 412 of FIG. 6. FIG. 6 illustrates a continuing schematic example method or process performing an export of audit data, and is labeled 401 for clarity. It is understood that the illustrated example method or process performing an export of audit data spans from 400 in FIG. 5 to 401 in FIG. 6. For ease of understanding, the export audit data process will simply be numbered as 400, but it will be understood comprises 400 and 401. At 412, the output file of 408 and/or 410 it utilized to create an audit data export file. In one non-limiting example, this can include saving data values stored in temporary memory to being stored in non-volatile memory. Next, at 414, the system architecture 200 reads, gets, or otherwise receives the serial number of the laundry treating appliance. In this example, the system architecture 200 can read, get, or otherwise receive the serial number from at least one of the user interface 108, the controller 106, or a combination thereof.

Once the system architecture 200 has the serial number of the laundry treating appliance, the system architecture 200 determines whether the serial number is valid at 416. This process at 416 can be similar to any of the similar processes in the performing a model number or serial number update process 300, including but not limited to, decisions at 304, 308, 320, or the like. If the determination is made that the serial number of the laundry treating appliance at 416 is not valid, the system architecture 200 can proceed to 418 to show a message that the serial number of the laundry treating appliance is not valid, followed by proceeding to end the export audit data process 400 at 420.

If the determination is made that the serial number of the laundry treating appliance at 416 is valid, the system architecture 200 can proceed to 422. At 422, the system architecture 200 can determine whether an existing file or directory for the audit data export file exists on the removable memory unit 111 received at the removable memory interface 109. In one non-limiting example, during 412, the system architecture can create the audit data export file using a known or predetermined naming convention, such as including at least a portion of serial number of the laundry treating appliance in naming the audit data export file. In this sense, the audit data export file can be identifiable, including uniquely identifiable, based on the particular laundry treating appliance it was exported from. Following this example, the system architecture 200 can determine whether an existing file or directory having the same audit data export file, director, or naming convention, exists on the removable memory unit 111 received at the removable memory interface 109.

If it is determined by the system architecture 200 that no existing directory or file is found at the removable memory unit 111, the method can proceed to generate a directory with the known or predetermined naming convention at 424, then proceed to 426. If it is determined by the system architecture 200 that an existing directory or file is found at the removable memory unit 111, the method can proceed to open the directory at 428. Optionally, a user or service technician and be presented with a selectable option to overwrite an existing file or not, at this point. Once the directory is opened at 428, the method can proceed to 426.

At 426, the system architecture 200 can write, copy, save, or otherwise transfer the audit data output file to the memory 113 of the removable memory unit 111, by way of the removable memory interface 109, such that the audit data output file is written to or saved to the directory of the removable memory unit 111. Upon completion of the write at 426, the process can move to 430, whereby the system architecture 200 can validate or verify the write process completed successfully. If the system architecture 200 determines the write process succeeded, the system architecture 200 can proceed to end the export audit data process 400 at 436.

If the system architecture 200 determines the write process did not succeed, the system architecture 200 can proceed to optionally, in one non-limiting example, determine if the removable memory unit 111 is still detected, or possibly had been removed or otherwise undetectable before the write process of 426 completed. Determining whether the removable memory unit 111 is detected can be similar to the process described with respect to 402. If the process at 432 determines the removable memory unit 111 is detected, the system architecture 200 can proceed to 418 to show an error message that the audit data file export failed, followed by ending the process at 420. If the process at 432 determines the removable memory unit 111 is not detected, the system architecture 200 can proceed to 434 to show an error message (or a different error message), indicating the removable memory unit 111 is not detected or the write process has failed, followed by ending the process at 420.

In particular locations or common physical locations for housing multiple laundry treating appliances, owners, operators, or service technicians may desire to read the laundry treating appliance audit data frequently to check the revenue, number of cycles run, and/or other counters or data to calculate the profits or to generate reports. When performed over many laundry treating appliances, the task can be come time-consuming and burdensome to perform.

Using Audit Data Export Feature using USB user will be able to read the laundry treating appliance audit data within fraction of seconds. The software architecture 200 operates to write audit data in the form of uniquely named data related to the corresponding uniquely-serially-numbered laundry treating appliance. Benefits of the disclosure can include the unique software algorithm of the software architecture to read audit data and write in the USB, data can be stored in the USB memory, thumb drive, or another removable memory unit 111, data will be captured within a fraction of seconds, easy steps and simplified execution for the user or service technician, and the audit data will be stored with the name of file and folder as product serial number which can be referred to in future as well.

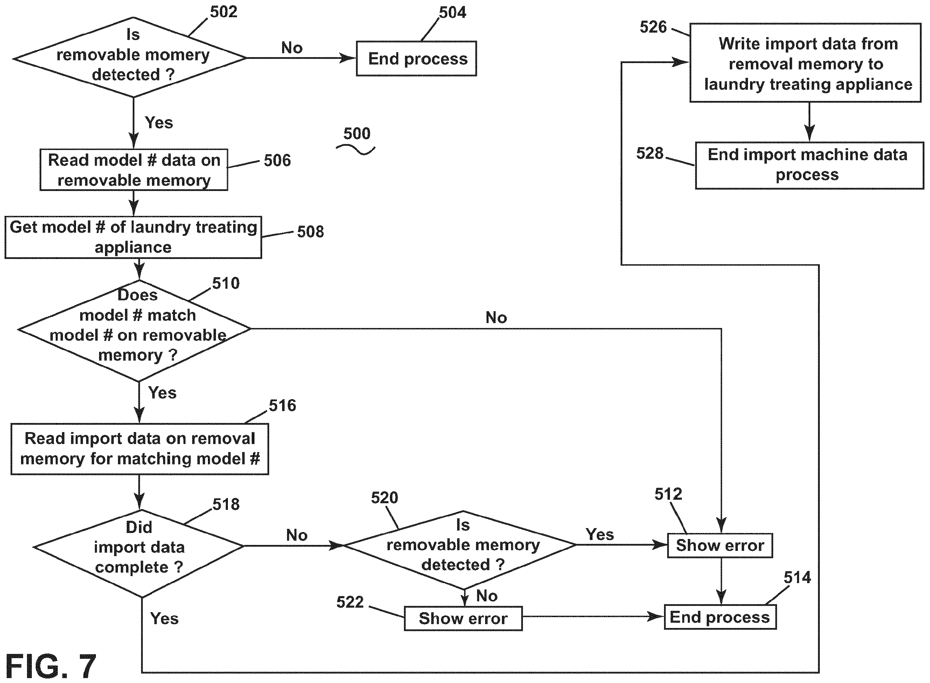

FIG. 7 illustrates a schematic example method or process of performing the import of machine data process 500. The process of performing the import of machine data process 500 begins at 502, wherein the system architecture 200 determines whether removable memory is detected at the laundry treating appliance. For example, the system architecture 200, or a controller 106, 117 thereof, can determine whether a removable memory unit 111 is received at, present at, or connected with the removable memory interface 109. If the removable memory unit 111 is not received at, not present at, or not connected with the removable memory interface 109, or otherwise not detected or not detectable by the system architecture 200 (e.g., memory corruption or USB drive failure, for example), the system architecture 200 proceeds to end the process of performing the import of machine data process 500 at 504.

If the removable memory unit 111 is received at, present at, or connected with the removable memory interface 109, or detected or detectable by the system architecture 200, the system architecture 200 proceeds to 506, at which time the system architecture 200 gets or reads the set of preexisting export data, or set of previously exported data stored in the memory 113 of the removable memory unit 111. In non-limiting examples, the removable memory unit 111 can include, store, or otherwise define multiple sets of preexisting export data or multiple sets of previously exported data, in which instance, the system architecture 200 can read each set or sets, as described herein. The method can then proceed to 508, wherein the system architecture 200 reads, gets, or otherwise receives the model number of the laundry treating appliance. In this example, the system architecture 200 can read, get, or otherwise receive the model number from at least one of the user interface 108, the controller 106, or a combination thereof.

Once the system architecture 200 has the model number of the laundry treating appliance at 506, the system architecture 200 determines at 510 whether the current laundry treating appliance model number (as received in 508) matches any of the set or sets of preexisting export data or set or sets of previously exported data stored in the memory 113 of the removable memory unit 111 (as read in 506). In this sense, the performing the import of machine data process 500 assume the set or sets of preexisting export data or set or sets of previously exported data includes data, or contains a naming convention, indicative of the laundry treating appliance model number from which the data applies to, or was exported from. In non-limiting instances, only certain export data from a particular laundry treating appliance or subset of laundry treating appliances can be utilized for importing a data, in line with the import of machine data process 500. In one non-limiting example, this can be due to different parameter values, missing parameter values, or extra parameter values, stored in the set or sets of preexisting export data or set or sets of previously exported data includes data, compared with the specific laundry treating appliance that is undergoing the import of machine data process 500.

If the determination is made that the model number of the current laundry treating appliance (as received in 508) does not match any of the set or sets of preexisting export data or set or sets of previously exported data includes data (as read in 506), the system architecture 200 can proceed to 512 to show an error message indicating that no import or importable machine data was found or located on the removable memory unit 111, followed by proceeding to end the import of machine data process 500 at 514.

If the determination is made that the model number of the current laundry treating appliance (as received in 508) does match at least one of the set or sets of preexisting export data or set or sets of previously exported data includes data (as read in 506; hereafter referred to as "the matching import data"), the system architecture 200 can proceed to 516 to read the matching import data from the memory 113 of the removable memory unit 111.

At 518, the system architecture 200 can validate or verify the reading of the matching import data from the removable memory unit 111 completed successfully. If the system architecture 200 determines the reading of the matching import data succeeded (e.g., the matching import data is fully readable, or stored in volatile memory of the laundry treating appliance), the system architecture 200 can proceed to copy, write, save, or otherwise commit the parameters stored in the matching import data to the specific laundry treating appliance at 526. In non-limiting examples, the parameters of the matching import data can be saved to memory of the laundry treating appliance, including overwriting existing parameters or existing parameter values, such as those stored in memory 110, 115. The system architecture 200 can then proceed to end the import of machine data process 500 at 528.

If the system architecture 200 determines the reading of the matching import data at 518 did not succeed, the system architecture 200 can proceed to optionally, in one non-limiting example, determine at 520 if the removable memory unit 111 is still detected, or possibly had been removed or otherwise undetectable before the read process of 518 completed. Determining whether the removable memory unit 111 is detected can be similar to the process described with respect to 402. If the process at 520 determines the removable memory unit 111 is detected, the system architecture 200 can proceed to 512 to show an error message that the import of machine data process 500 failed, followed by ending the process at 514. If the process at 520 determines the removable memory unit 111 is not detected, the system architecture 200 can proceed to 522 to show an error message (or a different error message), indicating the removable memory unit 111 is not detected or the write process has failed, followed by ending the process at 514.

In particular locations or common physical locations for housing multiple laundry treating appliances, owners, operators, or service technicians may desire to update parameter associated with one or more laundry treating appliances, such as wash or dry cycle parameters or cost per cycle parameters. When performed over many laundry treating appliances, the task, which can take many key presses or user inputs to change parameter data at the laundry treating appliance user interface, can become time-consuming and burdensome to perform.

Using an import machine data feature using USB, a user will be able to import existing parameter data to the laundry treating appliance within fraction of seconds, in a repeatable easy and convenient process just by moving the USB memory from laundry treating appliance to laundry treating appliance. The software architecture 200 operates to write or import the machine parameter data from the removable memory unit 111 to the new laundry treating appliance by recognizing a matching importable data file, identified by model number, for the laundry treating appliance. Benefits of the disclosure can include automatically ensuring matching model number parameters are received in the specific laundry treating appliance, protecting the data mismatch on parameters, and ensuring no unwanted setting or parameter updates occur. Further, the processes described herein allow for a duplication of parameter operations, including but not limited to, costs parameters, cycle of operation parameters, or overall duplication of functionality is ensured across many individual laundry treating appliances of the same model number or type.

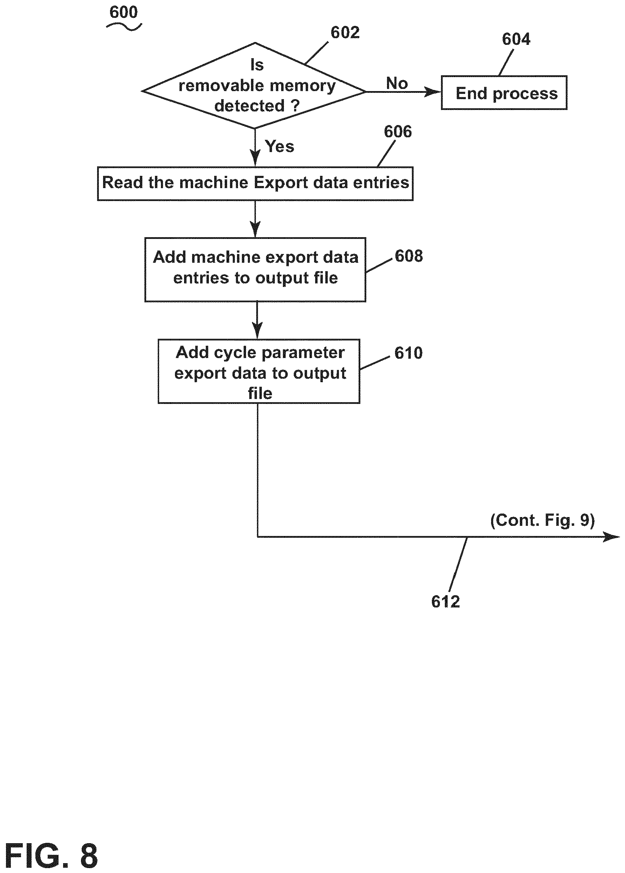

FIG. 8 illustrates a schematic example method or process of performing the export of machine data process 600. The process of performing the export of machine data process 600 begins at 602, wherein the system architecture 200 determines whether removable memory is detected at the laundry treating appliance. For example, the system architecture 200, or a controller 106, 117 thereof, can determine whether a removable memory unit 111 is received at, present at, or connected with the removable memory interface 109. If the removable memory unit 111 is not received at, not present at, or not connected with the removable memory interface 109, or otherwise not detected or not detectable by the system architecture 200 (e.g., memory corruption or USB drive failure, for example), the system architecture 200 proceeds to end the process of performing the export of machine data process 600 at 604.

If the removable memory unit 111 is received at, present at, or connected with the removable memory interface 109, or detected or detectable by the system architecture 200, the system architecture 200 proceeds to 606, at which time the system architecture 200 gets or reads a predetermined or known set of export data from the specific laundry treating appliance. In non-limiting examples, the set of export data from the specific laundry treating appliance can include, store, or otherwise define multiple sets of preexisting machine data, in which instance, the system architecture 200 can read each set or sets, as described herein.

In response to getting or reading the set of export data and any corresponding set of export data values stored at the laundry treating appliance at 606, the system architecture 200 can build an output file, such as by adding at least a subset of the aforementioned list to the output file, at 608. In non-limiting examples, the system architecture 200 can add null values read, the system architecture 200 can skip over null or zero value data, the system architecture 200 can replace null values read with another value (for example, a default value or a zero value), or the like, in order to build or form the output file. Optionally, the system architecture 200 can add cycle parameter data for export, previously described, to the same or a different output file in a separate operation at 610, or can add can the cycle parameter data at 608.

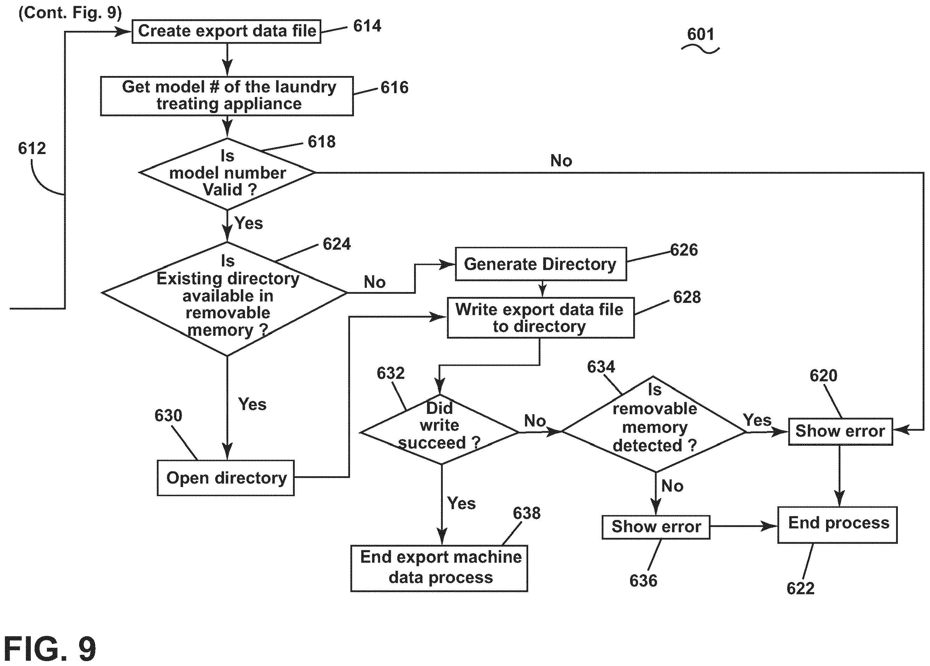

Regardless of optional 610, the system architecture 200 then proceeds, by way of cross-figure connection line 612, to 612 of FIG. 9. FIG. 9 illustrates a continuing schematic example method or process performing the export of machine data process 600, and is labeled 601 for clarity. It is understood that the illustrated example method or process performing an export of audit data spans from 600 in FIG. 8 to 601 in FIG. 9. For ease of understanding, the performing the export of machine data process will simply be numbered as 600, but it will be understood comprises 600 and 601. At 614, the output file of 608 and/or 610 it utilized to create an export data file. In one non-limiting example, this can include saving data values stored in temporary memory to being stored in non-volatile memory. Next, at 616, the system architecture 200 reads, gets, or otherwise receives the model number of the specific laundry treating appliance that is exporting the data. In this example, the system architecture 200 can read, get, or otherwise receive the model number from at least one of the user interface 108, the controller 106, or a combination thereof.

Once the system architecture 200 has the model number of the current laundry treating appliance from 616, the system architecture 200 determines whether the model number is valid at 618. This process at 618 can be similar to any of the similar processes in the performing a model number or serial number update process 300, including but not limited to, decisions at 304, 308, 320, or the like. If the determination is made that the model number of the current laundry treating appliance at 618 is not valid, the system architecture 200 can proceed to 620 to show a message that the model number of the current laundry treating appliance is not valid, followed by proceeding to end the export of machine data process 600 at 622.

If the determination is made that the model number of the laundry treating appliance at 618 is valid, the system architecture 200 can proceed to 624. At 624, the system architecture 200 can determine whether an existing file or directory for the export data file exists on the removable memory unit 111 received at the removable memory interface 109. In one non-limiting example, during 614, the system architecture can create the export data file using a known or predetermined naming convention, such as including at least a portion of model number of the current laundry treating appliance in naming the export data file. In this sense, the export data file can be identifiable, including identifiable by machine model number or machine type, based on the particular laundry treating appliance it was exported from. Following this example, the system architecture 200 can determine whether an existing file or directory having the same export data file, director, or naming convention, exists on the removable memory unit 111 received at the removable memory interface 109.

If it is determined by the system architecture 200 that no existing directory or file is found at the removable memory unit 111, the method can proceed to generate a directory with the known or predetermined naming convention at 626, then proceed to 628. If it is determined by the system architecture 200 that an existing directory or file is found at the removable memory unit 111, the method can proceed to open the directory at 630. Optionally, a user or service technician and be presented with a selectable option to overwrite an existing file or not, at this point. Once the directory is opened at 630, the method can proceed to 628.

At 628, the system architecture 200 can write, copy, save, or otherwise transfer the export data file of 614 to the memory 113 of the removable memory unit 111, by way of the removable memory interface 109, such that the export data file is written to or saved to the directory of the removable memory unit 111. Upon completion of the write at 628, the process can move to 632, whereby the system architecture 200 can validate or verify the write process completed successfully. If the system architecture 200 determines the write process succeeded, the system architecture 200 can proceed to end the export of machine data process 600 at 632.

If the system architecture 200 determines the write process did not succeed, the system architecture 200 can proceed to optionally, in one non-limiting example, determine if the removable memory unit 111 is still detected, or possibly had been removed or otherwise undetectable before the write process of 634 completed. Determining whether the removable memory unit 111 is detected can be similar to the process described with respect to 602. If the process at 634 determines the removable memory unit 111 is detected, the system architecture 200 can proceed to 620 to show an error message that the data file export failed, followed by ending the process at 622. If the process at 634 determines the removable memory unit 111 is not detected, the system architecture 200 can proceed to 636 to show an error message (or a different error message), indicating the removable memory unit 111 is not detected or the write process has failed, followed by ending the process at 622.

In particular locations or common physical locations for housing multiple laundry treating appliances, owners, operators, or service technicians may desire to update parameter associated with one or more laundry treating appliances, such as wash or dry cycle parameters or cost per cycle parameters. When performed over many laundry treating appliances, the task, which can take many key presses or user inputs to change parameter data at the laundry treating appliance user interface, can be come time-consuming and burdensome to perform.

Using an export machine data feature using USB, a user will be able to export existing parameter data of a particular laundry treating appliance within fraction of seconds. This export can then be imported, such that the same parameter export data from the particular laundry treating appliance can be duplicated during an import of those parameters to other laundry treating appliance in a repeatable easy and convenient process just by moving the USB memory from laundry treating appliance to laundry treating appliance. The software architecture 200 operates to export the particular laundry treating appliance to a removable memory unit 111 such as a USB thumb drive, and the other laundry treating appliances can, in turn, write or import the machine parameter data from the removable memory unit 111 to the new laundry treating appliance by recognizing a matching export and importable data file, identified by model number, for the laundry treating appliance. Benefits of the disclosure can include automatically ensuring matching model number parameters are received in the specific laundry treating appliance, protecting the data mismatch on parameters, and ensuring no unwanted setting or parameter updates occur. Further, the processes described herein allow for a duplication of parameter operations, including but not limited to, costs parameters, cycle of operation parameters, or overall duplication of functionality is ensured across many individual laundry treating appliances of the same model number or type.

To the extent not already described, the different features and structures of the various aspects can be used in combination with each other as desired, or can be used separately. That one feature can not be illustrated in all of the aspects is not meant to be construed that it cannot be, but is done for brevity of description. Thus, the various features of the different aspects can be mixed and matched as desired to form new aspects, whether or not the new aspects are expressly described.

While the present disclosure has been specifically described in connection with certain specific aspects thereof, it is to be understood that this is by way of illustration and not of limitation. Reasonable variation and modification are possible within the scope of the forgoing disclosure and drawings without departing from the spirit of the present disclosure. Hence, specific dimensions and other physical characteristics relating to the aspects disclosed herein are not to be considered as limiting, unless expressly stated otherwise.

This written description uses examples to disclose aspects of the disclosure, including the best mode, and also to enable any person skilled in the art to practice aspects of the disclosure, including making and using any devices or systems and performing any incorporated methods. The patentable scope of the disclosure is defined by the claims, and can include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A system architecture (200) for a laundry treating appliance, comprising:
a user interface (108) having memory storing a first model number value and a first serial number value;
an appliance control unit having memory storing a second model number value and a second serial number value; and
the system architecture (200) configured to perform a first determination (204, 304) of whether the first model number value and the first serial number value are valid, and configured to perform a second determination (308, 340) of whether the second model number value and the second serial number value are valid, and based on the first determination (204, 304) and the second determination (308, 340), update (312, 316, 322) at least one of the first model number value, the second model number value, the first serial number value, or the second serial number value that was determined to be invalid with a valid corresponding model number value or a valid corresponding serial number value.

2. The system architecture (200) of claim 1, further comprising a removable memory unit (111) having memory (113) storing a third model number value and a third serial number value.

3. The system architecture (200) of claim 2, wherein, based on the first determination (204, 304) that the first model number value and the first serial number value are invalid, and based on the second determination (308) that the second model number value and the second serial number value are invalid, the system architecture is further configured to update (312) the first model number value with the third model number value, update the second model number value with the third model number value, update the first serial number value with the third serial number value, and update the second serial number value with the third serial number value.

4. The system architecture (200) of claim 1 or 2 or 3, wherein, based on the first determination (204, 304) that the first model number value and the first serial number value are invalid, and based on the second determination (308) that the second model number and the second serial number are valid, the system architecture is further configured to update (316) the first model number value with the second model number value, and update the first serial number value with the second serial number value.

5. The system architecture (200) of any one of the preceding claims, wherein, based on the first determination (204, 304) that the first model number value and the first serial number value are valid, and based on the second determination (320) that the second model number value and the second serial number value are invalid, the system architecture is further configured to update (322) the second model number value with the first model number value, and update the second serial number value with the first serial number value.

6. The system architecture (200) of any one of the preceding claims , wherein the first determination (204, 304) is at least partially based on a predetermined naming convention for at least one of the first model number or the first serial number.

7. A laundry treating appliance including the system architecture of any one of the preceding claims, wherein the system architecture has one or more processing units (CPUs), one or more memories for storing data or program code operatively connected with the one or more processing units, and
wherein the laundry treatment appliance is of: a horizontal or vertical axis clothes washer; a combination washing machine and dryer; a tumbling or stationary refreshing/revitalizing machine; an extractor; a non-aqueous washing apparatus; and a revitalizing machine.

8. A method (400) of exporting audit data for a laundry treating appliance, the method comprising:
reading (406), by a system architecture (200), a set of machine audit data values stored at the laundry treating appliance;
determining (416), by the system architecture (200), whether a serial number of the laundry treating appliance is valid; and
based on a determination (416) that the serial number of the laundry treating appliance is valid, writing (426) the set of machine audit data values to a removable memory unit (111), wherein the writing (426) the set of machine audit data values includes a data file naming convention including at least a portion of the serial number of the laundry treating appliance.

9. The method (400) of claim 8, wherein the writing (426) of the set of machine audit data values further comprises writing (426) the set of machine audit data values to a removable memory unit (111) receivable at a universal serial bus (USB) interface of the laundry treating appliance.

10. The method (400) of claim 8 or 9 wherein the reading (406) of the set of machine audit data values includes reading at least a subset of cycle count parameters; and/or wherein the reading (406) of the set of machine audit data values includes reading at least a subset of cycle cost parameters.

11. The method (400) of any one of preceding claims 8-10, further comprising updating (312, 316, 322) an invalid serial number to a valid serial number prior to reading (406) the set of machine audit data values.

12. The method (400) of any one of preceding claims 8-11, further comprising ensuring a user interface having memory storing a first model number value and a first serial number value matches a respective second model number value and a second serial number value stored in an appliance control unit, prior to reading (406) the set of machine audit data values.

13. The method (400) of claim 12, further comprising updating (312, 316, 322) at least one of the first serial number value or the second serial number value such that the first and second serial number values match, prior to reading (406) the set of machine audit data values.

14. A method (400) of operating a system architecture (200) for a set of laundry treating appliances, the method comprising:
reading (204, 304), by the system architecture (200), a model number value from one of the set of laundry treating appliances;
determining (402), by the system architecture (200), whether a removable memory unit (111) is connected with the system architecture (200) of the one of the set of laundry treating appliances; and
upon a determination (402) that the removable memory unit (111) is connected with the system architecture (200), exporting (426) parameter data, by the system architecture (200), to the removable memory unit (111), wherein the exporting (426) the parameter data of the one of the set of laundry treating appliances includes an export data file naming convention including at least a portion of the model number value of the one of the set of laundry treating appliances.

15. The method according to any one of preceding claims 8-14, wherein the system architecture is according to any one of claims 1-6.
